## Europäisches Patentamt
## European Patent Office
## Office européen des brevets

(19)

(11) Veröffentlichungsnummer: **0 074 142**
.B1

(12) **EUROPÄISCHE PATENTSCHRIFT**

(45) Veröffentlichungstag der Patentschrift:
27.02.85

(21) Anmeldenummer: 82201071.6

(22) Anmeldetag: 31.08.82

(51) Int. Cl.⁴: **H 04 N 5/60**, H 04 H 5/00

(54) **Schaltungsanordnung zum Empfangen zweier Modulationssignale, insbesondere beim Fernsehen.**

(30) Priorität: 04.09.81 DE 3135060

(43) Veröffentlichungstag der Anmeldung:
16.03.83 Patentblatt 83/11

(45) Bekanntmachung des Hinweises auf die Patenterteilung:
27.02.85 Patentblatt 85/9

(84) Benannte Vertragsstaaten:
AT BE DE GB IT SE

(56) Entgegenhaltungen:
EP - A - 0 056 270
DE - A - 2 827 159

(73) Patentinhaber: Philips Patentverwaltung GmbH,
Billstrasse 80, D-2000 Hamburg 28 (DE)
(84) Benannte Vertragsstaaten: DE

(73) Patentinhaber: N.V. Philips' Gloeilampenfabrieken,
Groenewoudseweg 1, NL-5621 BA Eindhoven (NL)
(84) Benannte Vertragsstaaten: BE GB IT SE AT

(72) Erfinder: Schwarz, Henning, Cronsberg 18,
D-2057 Reinbek (DE)
Erfinder: Buhse, Ulf, Am Deich 40, D-2201 Kollmar (DE)

(74) Vertreter: Hartmann, Heinrich, Dipl.-Ing. et al, Philips
Patentverwaltung GmbH
Billstrasse 80 Postfach 10 51 49,
D-2000 Hamburg 28 (DE)

## Beschreibung

Die Erfindung bezieht sich auf eine Schaltungsanordnung zum Empfangen zweier Modulationssignale, insbesondere beim Fernsehen, nach dem Oberbegriff des Hauptanspruchs.

Bei einer solchen, in der europäischen Patentanmeldung Nr. 56270 beschriebenen Schaltungsanordnung, die einen Stand der Technik im Sinne von Artikel 54 (3) EPÜ darstellt, werden das erste Modulationssignal $K_1$ auf dem ersten Träger und das zweite Modulationssignal $K_2$ auf dem zweiten Träger frequenzmässig nebeneinander, vorzugsweise in Frequenzmodulation, übertragen. Die beiden Modulationssignale können bei Zweitonübertragung unterschiedliche Informationen, z.B. in verschiedenen Sprachen, enthalten und alternativ weiterverarbeitet werden. Sie können auch zu einem Stereosignal gehören, wobei z.B. das Signal $K_1$ die Summe (L + R) der Links-Information und der Rechts-Information enthält, während das Modulationssignal $K_2$ die doppelte Rechts-Information (2R) enthält. Um die Links-Information zu gewinnen, muss also einerseits eine Korrektur um den Faktor 2 und anschliessend eine Differenzbildung vorgenommen werden, wobei die Amplituden möglichst genau abgeglichen sein sollen, um ein Übersprechen möglichst zu vermeiden.

Aus „Rundfunktechnische Mitteilungen", Heft 1, 1979, S. 12, Bild 4, ist es bekannt, Verstärkung und Differenzbildung mit einem Operationsverstärker vorzunehmen, wobei die Amplitudenangleichung entsprechend dem Faktor 2 erfolgt. Es stellt sich heraus, dass dabei das Übersprechen auch vom Innenwiderstand der Signalquelle $K_2$ abhängig ist; das ist besonders nachteilig bei integrierten Schaltungen, in denen je nach dem Gerätekonzept verschiedene Signalquellen angeschaltet sein können.

Der Erfindung liegt die Aufgabe zugrunde, den Abgleich für die Differenzbildung (Dematrizierung) unabhängig von der Art der Aussenbeschaltung zu machen und ausserhalb des Signalweges, z.B. mittels eines Gleichstromeinstellwertes, vorzunehmen.

Diese Aufgabe wird bei einer Schaltungsanordnung der eingangs genannten Art nach der Erfindung durch die Merkmale im kennzeichnenden Teil des Hauptanspruchs gelöst.

Nach einer Weiterbildung der Erfindung kann der Verstärkungsgrad der Verstärker auch gleichsinnig eingestellt werden, so dass eine Lautstärkeeinstellung vorgenommen werden kann. Das Minimum des Übersprechens wird dabei zwar nur für eine bestimmte Lautstärke erreicht werden. Aber für einfachere Schaltungskonzepte mit geringeren Qualitätsanforderungen kann sich eine wünschenswerte Verringerung des Aufwandes ergeben.

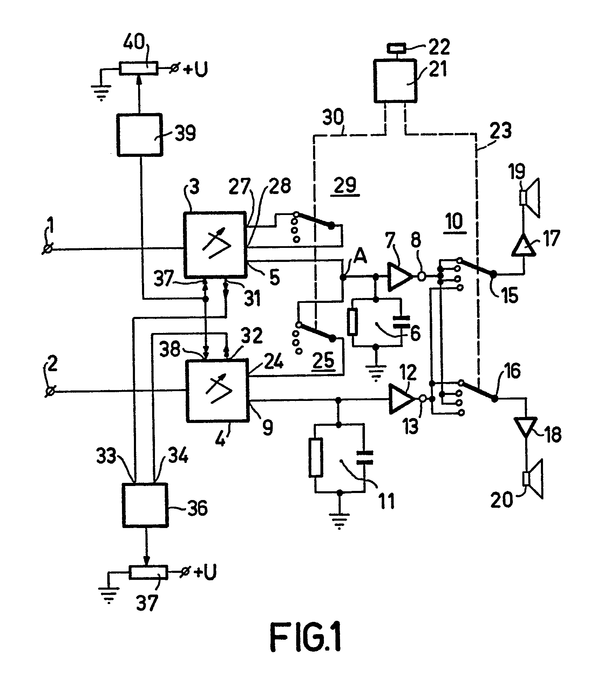

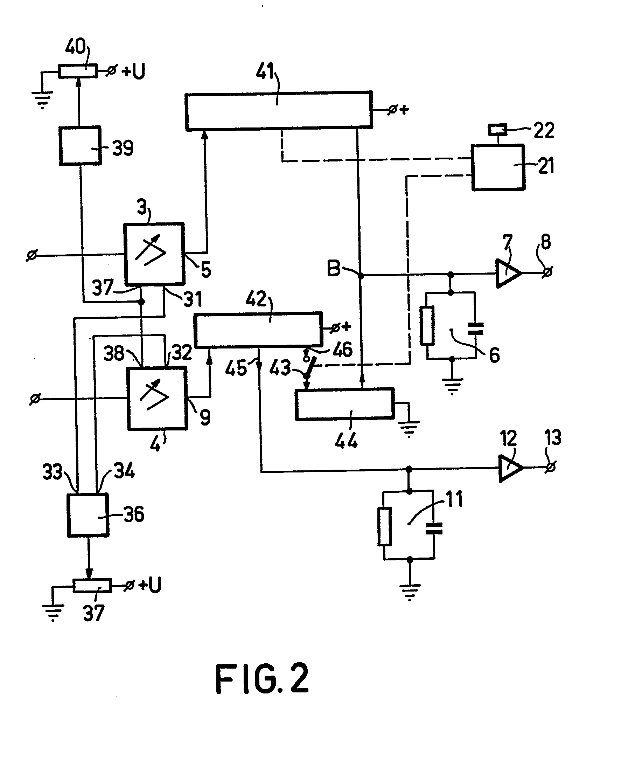

Die Erfindung wird nachstehend anhand der Zeichnung beispielsweise näher erläutert, die in Fig. 1 ein Blockschaltbild der Erfindung zeigt, während in Fig. 2 ein Blockschaltbild mit mehr Einzelheiten dargestellt ist.

An Eingangsklemmen 1 und 2 werden die vom Träger demodulierten Modulationssignale $K_1$ und $K_2$ zugeführt und an die Eingänge zweier einstellbarer Verstärker 3 und 4 zugeführt. Der Ausgang 5 des Verstärkers 3 ist mit einem Deemphasisglied 6 und dem Eingang eines Impedanzwandlers 7 verbunden, dessen Ausgang an die erste Eingangsklemme 8 eines Modulationsartenwahlschalters 10 angeschlossen ist. Ein Ausgang 9 des Verstärkers 4 ist mit einem zweiten Deemphasisglied 11 gegen Erde und dem Eingang eines zweiten Impedanzwandlers 12 verbunden, dessen Ausgang an der zweiten Eingangsklemme 13 des Modulationsartenwahlschalters 10 liegt.

An die Ausgangsklemmen 15 und 16 des Modulationsartenwahlschalters 10 sind über weitere Signalverarbeitungsschaltungen, z.B. Verstärker 17 bzw. 18, die Lautsprecher 19 bzw. 20 angeschlossen. Der Schalter 10 ist ein vierstufiger Umschalter, dessen Kontakte in bekannter Weise so verbunden sind, dass – von oben gezählt – in der dargestellten ersten Stellung die Signale von den Eingangsklemmen 8 und 13 getrennt zu den Lautsprechern 19 bzw. 20 gelangen. In der zweiten Stellung werden sie für die monoaurale Wiedergabe eines stereophonischen Signals gemeinsam von der Klemme 8 gespeist. In der dritten Stellung ist die gleiche Verbindung vorgesehen, um das Informationssignal $K_1$, das z.B. der Originalsprache eines Filmes entspricht, über beide Lautsprecher 19 und 20 hörbar zu machen. In der vierten Stellung wird das Signal $K_2$ von der Klemme 13 an beide Lautsprecher zugeführt, z.B. zur Wiedergabe in einer anderen Sprache. Die Betätigung der beiden Umschalter, deren Zunge an den Ausgangsklemmen 15 bzw. 16 liegt, erfolgt mittels eines Betätigungsschalters 21, der mittels eines Drehknopfes 23 in eine der vier Stellungen gebracht werden kann. Die Wirkung dieses Schalters 21 wird durch die gestrichelte Linie 23 zu den Umschalterzonen der Umschalter 15 und 16 dargestellt. Der Betätigungsschalter 21 kann auch als elektronische Steuerung ausgeführt werden.

Für Stereoempfang wird vom Ausgang 24 des Verstärkers 4 ein Signal über einen Umschalter 25 dem Eingang des Impedanzwandlers 7 zugeführt derart, dass am Punkt A die Differenz der Signale vom Ausgang 5 des Verstärkers 3 und dem Signal vom Ausgang 24 des Verstärkers 4 gebildet wird. Gleichzeitig muss jedoch der Verstärkungsgrad angepasst werden; dazu wird zwischen den Ausgängen 27 und 28 des Verstärkers 3 mittels eines Umschalters 29 eine Verbindung hergestellt derart, dass die Verstärkung um den Faktor 2 angehoben wird. Es wäre natürlich auch möglich, in entsprechender Weise durch einen Umschalter die Verstärkung des Verstärkers 4 auf 0,5 zu reduzieren.

Die Umschalter 25 und 29 werden über eine Wirkungsverbindung 30 vom Betätigungsschalter 21 mit in die erforderliche Stellung gebracht. Wie man sieht, sind diese Schalter nur bei Stereoempfang geschlossen; bei den anderen Empfangsarten wird die Verstärkung nicht geändert und die Signale werden nicht dematriziert.

Die Verstärker 3 und 4 sind als kreuzgekoppelte Differenzverstärker ausgeführt derart, dass man an ihren Regeleingängen 31 und 32 durch Gleichspannungen bzw. Gleichströme die Verstärkung verändern kann. Diese Gleichstromregelgrössen werden geliefert von den Ausgängen 33 und 34 eines Differenzverstärkers 36, dessen Eingang vom Abgriff eines zwischen der Speisequelle +U und Masse eingeschalteten Potentiometers 37 abgenommen ist. Bei einer Verstellung dieses Abgriffes ändern sich die Ausgangswerte des Differenzverstärkers 36 gegenläufig, und entsprechend werden die Verstärkungsgrade der Verstärker 3 und 4 gegenläufig geändert. Durch Verschieben des Abgriffes am Potentiometer 37 ist also ein Abgleich der Amplituden der bei Stereoempfang dem Impedanzwandler 7 zugeführten Schwingungen $K_1$ und $K_2$ auf minimales Übersprechen möglich.

Die Verstärker 3 und 4 haben weiter Eingänge 37 und 38, die miteinander und mit dem Ausgang eines Gleichstromverstärkers 39 verbunden sind. Der Eingang des Verstärkers 39 ist an den Abgriff eines zwischen Masse und $+U_B$ angeschlossenen Potentiometers 40 angeschlossen. Durch Verstellen dieses Abgriffes kann die Verstärkung der Verstärker 3 und 4 gleichsinnig geändert werden. Dadurch ist ein Abgleich des Pegels für beide Übertragungskanäle möglich. Gegebenenfalls kann eine Verstellung des Potentiometers 40 auch zur Lautstärkeeinstellung benutzt werden.

In Fig. 2 ist das Blockschaltbild nach Fig. 1 mit einigen weiteren Einzelheiten dargestellt, wobei gleiche Teile mit gleichen Bezugszeichen versehen wurden. Der Umschalter 10 mit den nachgeschalteten Verbindungen zu den Lautsprechern wurde weggelassen. Der Ausgang 5 des Verstärkers 3 steuert hierbei eine Stromspiegelschaltung 41, und der Ausgang 9 des Verstärkers 4 steuert eine Stromspiegelschaltung 42. Der Ausgang der Stromspiegelschaltung 41 ist an einen Stromknotenpunkt B angeschlossen, der am Eingang des Impedanzwandlers 7 liegt. Ein erster Ausgang 45 der Stromspiegelschaltung 42 ist mit dem Eingang des Impedanzwandlers 12 verbunden. Ein zweiter Ausgang 46 der Stromspiegelschaltung 42 ist über einen Schalter 43 mit dem Eingang einer dritten Stromspiegelschaltung 44 verbunden, deren Ausgang ebenfalls am Knotenpunkt B und damit am Eingang des Impedanzwandlers 7 liegt. Dem Impedanzwandler 7 mit angeschlossenem Deemphasisglied 6 wird so ein Signal zugeführt, das der Differenz der Stereosignale 2(L + R) und 2R, also 2L, entspricht. Die Verstärker 3 und 4 haben — bis auf durch den Abgleich bedingte, geringe Unterschiede — gleiche Verstärkung; ebenso ist das Verhältnis zwischen Eingangsstrom und Ausgangsstrom der Stromspiegel 41, 42 und 44 normalerweise gleich. Wenn jedoch Stereoton empfangen wird und eine Dematrizierung erfolgen soll, wird nach Einstellung des Betätigungsschalters 21 durch den Drehknopf 22 das Übertragungsverhältnis in der Stromspiegelschaltung 41 verdoppelt und der Schalter 43 geschlossen. Dann wird das Signal K von der Ausgangsklemme 9 über die Stromspiegelschaltungen 42 und 44 auch zum Knoten B übertragen, wobei die gewünschte Dematrizierung erfolgt.

In der Schaltung nach Fig. 2 werden also die Verstärker 3 und 4 nicht für den erwähnten Faktor 2 umgeschaltet, sondern diese Anpassung erfolgt innerhalb einer für die Signalübertragung und Entkopplung zum Ausgang hin ohnehin vorgesehene Stromspiegelschaltung 41. Weiter ist der Schalter 43 im geöffneten Zustand nicht an den Stromkreis des Signals $K_1$ angeschlossen, sondern er liegt lediglich zwischen den beiden Stromspiegelschaltungen 42 und 44. Er kann dabei in eine der Stromspiegelschaltungen mit einbezogen werden, indem dort durch eine Gleichstromschaltgrösse eine Sperrung eines das Signal $K_2$ übertragenden Transistors erfolgt.

## Patentansprüche

1. Schaltungsanordnung zum Empfangen zweier Modulationssignale, insbesondere beim Fernsehen, bei der das erste Modulationssignal $(K_1)$, z.B. das Stereosummensignal (L + R) oder ein erstes Tonsignal, auf einem ersten Träger und das zweite Modulationssignal $(K_2)$, z.B. das Rechtssignal (2R) oder ein zweites Tonsignal, auf einem zweiten Träger übertragen werden, wobei bei Stereoempfang aus den beiden Modulationssignalen mittels einer Addier- bzw. Subtrahierstufe das Linkssignal gebildet wird und wobei jedes der beiden Modulationssignale über je einen Verstärker geführt wird, von denen einer derart umschaltbar ist, dass die Verstärkung für das Summensignal um den Faktor 2 höher ist als für das Rechtssignal und wobei bei Zweitonempfang die Verstärkung für beide Modulationssignale gleich ist, dadurch gekennzeichnet, dass beide Verstärker (3, 4) eine durch Gleichspannungen bzw. Gleichströme einstellbare Verstärkung aufweisen, wobei der Verstärkungsgrad beider Verstärker zwecks optimaler Dematrizierung des Stereosignals gegenläufig einstellbar ist.

2. Schaltungsanordnung nach Anspruch 1, dadurch gekennzeichnet, dass der Verstärkungsgrad der Verstärker (3, 4) zum Amplitudenabgleich, ggf. zur Lautstärkeeinstellung, gleichsinnig einstellbar ist.

3. Schaltungsanordnung nach einem der Ansprüche 1 oder 2, dadurch gekennzeichnet, dass die Übertragung der Signale vom Verstärker (3 bzw. 4) zum Ausgang (8 bzw. 9) über wenigstens eine Stromspiegelschaltung (41, 42 bzw. 44) erfolgt und dass die Umschaltung auf Stereomatrizierung und die Umschaltung des Verstärkungsgrades um den Faktor 2 in oder an einer Stromspiegelschaltung erfolgt.

4. Schaltungsanordnung nach einem der Ansprüche 1, 2 oder 3, dadurch gekennzeichnet, dass die für die Dematrizierung notwendige Differenzbildung mittels der entsprechenden Signalströme an einem Knotenpunkt vorgenommen wird.

## Claims

1. A circuit arrangement for receiving two modulating signals, more specifically for television, the first modulating signal ($K_1$), for example the stereo sum signal (L + R) or a first sound signal being transmitted on a first carrier and the second modulating signal ($K_2$), for example the right channel signal (2R) or a second sound signal being transmitted on a second carrier, the left channel signal being formed for stereo reception from the two modulating signals by means of an adder stage or a subtractor stage, respectively, and each of the two modulating signals being conveyed through an amplifier one of which is switchable such that the gain for sum signal is a factor of 2 higher than the gain for the right channel signal and for the reception of two sound signals, the gains being equal for both modulating signals, characterized in that the two amplifiers (3, 4) have gains which can be adjusted by means of direct voltages or direct currents, the gains of the two amplifiers being oppositely adjustable to achieve an optimum dematrixing of the stereo signal.

2. A circuit arrangement as claimed in Claim 1, characterized in that the gains of the amplifiers (3, 4) are adjustable in the same direction for amplitude matching, optionally for a setting of the volume.

3. A cicuit arrangement as claimed in Claim 1 or 2, characterized in that the transfer of the signals from the amplifiers (3 or 4, respectively) to the output (8 or 9, respectively) is effected *via* at least a current mirror circuit (41, 42 and 44, respectively) and that the change-over to stereo matrixing and the switch of the gain by a factor of 2 is carried out in or at a current mirror circuit.

4. A circuit arrangement as claimed in Claim 1, 2 or 3, characterized in that forming the difference with the aid of the relevant signal currents required for the dematrixing is effected at a node.

## Revendications

1. Montage de circuit pour la réception de deux signaux de modulation, en particulier pour la télévision, dans lequel le premier signal de modulation ($K_1$), par exemple le signal de somme stéréophonique (L + R) ou un premier signal sonore, est transmis sur une première porteuse et le second signal de modulation ($K_2$), par exemple le signal de droite (2R) ou un second signal sonore, est transmis sur une seconde porteuse, étant entendu que, dans le cas d'une réception en stéréophonie, le signal de gauche est formé à partir des deux signaux de modulation au moyen d'un étage d'addition ou de soustraction et que chacun des deux signaux de modulation est chaque fois amené à passer par un amplificateur, l'un de ceux-ci pouvant être commuté de telle manière que l'amplification pour le signal de somme soit supérieure d'un facteur 2 à celle prévue pour le signal de droite et l'amplification étant la même pour les deux signaux de modulation dans le cas d'une réception sonore double, caractérisé en ce que les deux amplificateurs (3, 4) présentent une amplification pouvant être réglée au moyen de tensions continues ou de courants continus, les taux d'amplification des deux amplificateurs pouvant être réglés en sens opposés en vue d'un dématriçage optimal du signal stéréophonique.

2. Montage de circuit suivant la revendication 1, caractérisé en ce que les taux d'amplification des amplificateurs (3, 4) peuvent être réglés dans le même sens en vue d'une égalisation d'amplitude, éventuellement pour le réglage de l'intensité sonore.

3. Montage de circuit suivant l'une des revendications 1 ou 2, caractérisé en ce que la transmission des signaux de l'amplificateur (3 ou 4, respectivement) vers la sortie (8 ou 9, respectivement) est réalisée par l'intermédiaire d'au moins un circuit en miroir de courant (41, 42 ou 44, respectivement), la commutation sur matriçage stéréophonique et la commutation du taux d'amplification selon le facteur 2 étant réalisées dans un circuit en miroir de courant ou au niveau d'un tel circuit.

4. Montage de circuit suivant l'une des revendications 1, 2 ou 3, caractérisé en ce que la formation de différence nécessaire pour le dématriçage est réalisée au moyen des flux de signaux correspondants en un point de jonction.

FIG.1

FIG. 2